# EUROPEAN PATENT APPLICATION

(11) **EP 4 844 596 A1**
(43) Date of publication of application: **25.11.2026**
(21) Application number: 25305735.0
(22) Date of filing: 22.05.2025
(51) Int. Cl.: G06F 13/40, G06F 13/42, H04L 12/40, G06F 13/38

(54) **COMMUNICATIONS SWITCH FOR MULTIPLE TARGETS SHARING THE SAME TARGET ADDRESS**

(71) Applicant: NXP B.V., 5656 AG Eindhoven (NL)
(72) Inventor: Vivien, Franck, 31023 Toulouse (FR); Devinoy, Raymond-Henri, 31023 Toulouse (FR)
(74) Representative: Krott, Michel

(57) **Abstract**

A system (100) includes a plurality of targets (106, 108), each having a corresponding target address, in which a first target (106) and a second target (108) of the plurality of targets (106,108) share a same target address. One target of the first (106) and second (108) targets is considered a selected target. A communications switch (102) communicates a clock signal (112) and data signal (114) between I/O pads of the system (100) and the plurality of targets (106, 108). The I/O pads (112, 114) communicate with a host (132) via a communications interface (136). A switch controller (104) provides a target select request signal (128) to the communications switch (102) to indicate a desired target between the first (106) and second (108) targets, and the communications switch (102) selectively accepts the desired target as the selected target based on whether or not communication through the communications interface (136) is occurring.

## Description

### Background

### Field

This disclosure relates generally to integrated circuits, and more specifically, to a communications switch for multiple targets sharing the same target address.

### Related Art

In many systems today, external hosts use a communications interface protocol to communicate with several targets within a System on a Chip (SoC). For example, one such communication interface protocol is the Inter-Integrated Circuit (I2C) interface, which is a synchronous, multiple-host/multiple-target, serial communication bus which uses only two general purpose input/output (I/O) pins to communicate two signals. The first signal of the I2C interface is a serial data line (SDA), and the second signal is a serial clock line (SCL), both of which are bi-directional signals between the host and the target. Power consumption is a common issue which needs to be addressed, in which an SoC may be able to operate in different power states. However, regardless of the power state, it is necessary to maintain accuracy in communications between the host and target.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in block diagram form, a system having one or more hosts in communication with an SoC having a communication switch and a plurality of targets, in accordance with one embodiment of the present invention.
FIG. 2 illustrates, in block diagram form, a more detailed view of the communications switch of FIG. 1, in accordance with an embodiment of the present invention.
FIG. 3 illustrates waveforms of various signals within the SoC of FIG. 1, in accordance with an embodiment of the present invention.
FIGs. 4 and 5 illustrate, in block diagram form, more detailed views of portions of the communications switch of FIG. 2, in accordance with embodiments of the present invention.
FIG. 6 illustrates waveforms of various signals of the SoC in accordance with an example operation.
FIG. 7 illustrates, in flow diagram form, a method of operation in the SoC of FIG. 1, in accordance with one embodiment of the present invention.

### Detailed Description

As described above, in a communication interface protocol, such as the I2C interface protocol, an external host is capable of communicating with multiple internal targets of an SoC. Typically, each target has a unique corresponding target address so that a host can identify a particular target for communication using the unique target address. However, in one aspect described herein, a host is capable of communicating with multiple targets which share a same target address. In one embodiment, the host communicates with these multiple targets via a communications switch, but, due to the targets having a same shared address, the host cannot specifically identify one of these multiple targets. Instead, the switch routes communication between the host and a selected target of the multiple targets, in which a switch controller for the switch is configured to select which target at the same target address communicates with the host via a target selection request to the switch. The target selection request by the controller can be done asynchronous to any communication between the host and targets and without any awareness by the host that such a request is made. In order to avoid any perturbation to the external host, the switch is capable of refusing or delaying any switch in targets if a communication is already in progress. Further, in order to ensure no data is lost, the switch routes the serial clock line only to the selected target but routes the serial data line to all targets at the same shared target address.

In one embodiment, the controller makes the target selection request based on a power mode or state of the SoC. For example, one of the targets may be a high-power target and another one of the targets may be a low-power target, in which the high-power target cannot operate in low-power mode. Therefore, while operation in a normal mode (e.g. not in a low-power mode), the switch routes communication between the host and the high-power target. The controller, upon knowing that the SoC is entering the low-power mode (i.e. a low-power state), may send a target select request to the switch requesting that the selected target be switched to the low-power target instead. The switch implements the change in target selection only if no communication is in process. If a communication between the host and a target is already in process, the request is refused or delayed until the communication ends.

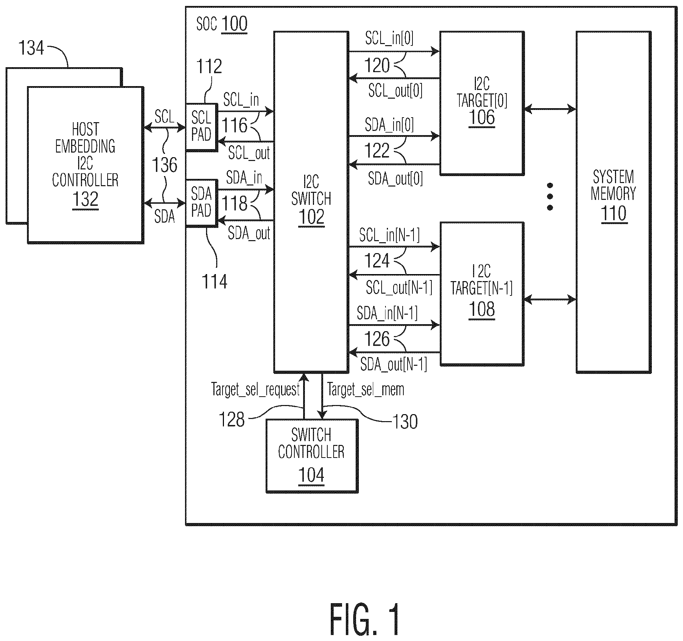

FIG. 1 illustrates, in block diagram form, a plurality of external hosts (e.g. hosts 134 and 132) in communication with a system 100, via a communications interface 136, in accordance with an embodiment of the present invention. In the illustrated embodiment, communications interface 136 implements an I2C interface protocol, and therefore, operation of FIG. 1 will be described in reference to the I2C interface protocol, although alternate embodiments may implement different communication interface protocols. In one embodiment, system 100 is implemented as an SoC and may therefore be referred to as SoC 100. SoC 100 includes a communications switch 102 (e.g. an I2C switch in the illustrated embodiment) and N targets[(N-1):0] (including targets 106 and 108). In the illustrated embodiment, each target of the N targets is an internal I2C target indexed by an index value 0 to (N-1), in which N is an integer greater than one. Each target has a corresponding target address, in which multiple targets of the N targets share a same address. Any number of external hosts (one or more) may communicate with the N targets via communications interface 136 and communications switch 102. Each host may include an embedded I2C controller to communication with the N targets of SoC 102 (and may therefore be referred to as I2C hosts). SoC 100 also includes a switch controller 104 coupled to switch 102, and a system memory 100 bi-directionally coupled to each of the N targets. System memory 100 can be any type of memory.

Interface 136 includes a bi-directional bus which communicates a bi-directional serial clock line (SCL) and a bi-directional serial data line (SDA), thus allowing communication between external hosts (e.g. hosts 132 and 134) and internal targets of SoC 100. SoC 100 includes an SCL pad 112 and an SDA pad 114, which operate as I/O pads to communicate with switch 102 of SoC 100 in accordance with a communication interface protocol (e.g. I2C interface protocol), in which switch 102 communicates data and clock signals between the I/O pads (112, 114) and the N targets. SCL pad 112 splits the SCL signal line into a unidirectional SCL input (SCL_in) to switch 102 and a unidirectional SCL output (SCL_out) from switch 102, and SDA pad 114 splits the SDA signal line into a unidirectional SDA input (SDA_in) to switch 102 and a unidirectional SDA output (SDA_out) from switch 102. Each target of the N targets receives a corresponding SCL input from switch 102 (e.g. SCL_in[(N-1):0]) and provides a corresponding SCL output to switch 102 (e.g. SCL_out[(N-1):0]). For example, target[0] 106 receives SCL_in[0] from switch 102 and provides SCL_out[0] to switch 102 via an SCL interface 120, and target[N-1] 108 receives SCL_in[N-1] from switch 102 and provides SCL_out[N-1] to switch 102 via an SCL interface 124. Similarly, each target receives a corresponding SDA input from switch 102 (e.g. SDA_in[(N-1):0]) and provides a corresponding SDA output to switch 102 (e.g. SDA_out[(N-1):0]). For example, target[0] 106 receives SDA_in[0] from switch 102 and provides SDA_out[0] to switch 102 via an SDA interface 122, and target[N-1] 108 receives SDA_in[N-1] from switch 102 and provides SDA_out[N-1] to switch 102 via an SDA interface 126. Switch controller 104 provides a target select request signal (target_sel_request) 128 to switch 102 and receives a stored or recorded selected target signal (target_sel_mem) 130 from switch 102. Each of target_sel_request and target_sel_mem indicate an index value of a target (e.g. a value between 0 and N-1), and therefore may be implemented with one or more bits, as needed, depending on the value of N.

As indicated above, multiple targets of the N targets share a same target address. For example, if each target address (also referred to as a target access address) is an 8-bit address, then the target address for each target which shares the same target address would have the same (i.e. identical) 8-bit value. While multiple targets can share the same target address, other targets of the N targets may have unique target addresses or other sets of multiple targets of the N targets may also share a target address. For example, a first set of multiple targets may share a first same target address and a second set of multiple targets may share a second same target address, different from the first same target address. In this example, switch controller 104 may communicate a pair of target_sel_request and target_sel_mem signals corresponding to each of the first set and second set of multiple targets. For ease of explanation herein, though, it will be assumed that N=2 such that SoC 100 includes two internal I2C targets (target 106 and target 108) in which target 106 and target 108 share a same target address (i.e. have identical target addresses). Therefore, target 106 may simply be referred to as target[0] and target 108 may simply be referred to as target[1].

As will be described in more detail below, assuming that the currently selected target for a communication with a host (e.g. 132) is target[i] (which is indicated by target_sel_mem), switch 102 routes the corresponding SCL_out[i] and SDA_out[i] signals from the selected target (target[i]) to SCL pad 112 and SDA pad 114. Switch 102 also routes the SCL_in signal from SCL pad 112 to selected target[i]. However, switch 102 routes the SDA_in signal from SDA pad 114 to all targets which share the same target address and not just to target[i]. In the above example with N=2 and targets[1:0] sharing the same address, switch 102 routes SDA_in from SDA pad 114 to both target[0] and target[1], regardless of which is the currently selected target.

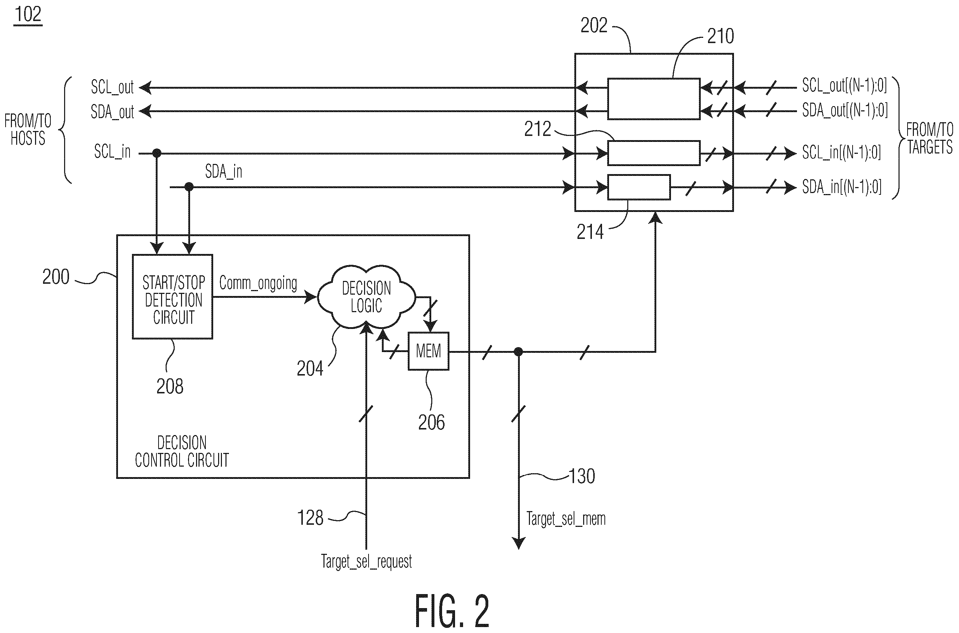

FIG. 2 illustrates, in block diagram form, a more detailed view of switch 102, in accordance with one embodiment of the present invention. Switch 102 includes combinatorial switch logic 202 and a decision control circuit 200. Decision control logic 200 includes a start/stop detection circuit 208 which receives SCL_in from pad 112 and SDA_in from pad 114, and uses these signals to determine whether or not a communication is on-going (i.e. is currently in process) between a host and a target via interface 136 and provides a comm_ongoing indicator accordingly to decision logic 204. In one embodiment, comm_ongoing is asserted to a logic level high if communication is on-going, and negated to a logic level low otherwise. Logic 204 receives target_sel_request from switch controller 104 which indicates that a switch to the requested target identified by target_sel_request is desired by switch controller 104. Decision logic 204, based on comm_ongoing, determines whether or not to accept the target switch to the requested target. If so, the index of the requested target identified by target_sel_request 128 is stored in storage circuity 206 and provided as target_sel_mem 130 which indicates the currently selected target. This stored index is provided to combinatorial switch logic 202 to control signal routing through switch 102 and is also provided to switch controller 104 which indicates to switch controller 104 whether the requested target switch was accepted or not. Storage circuitry 206 may be implemented with any type of storage circuitry, such as, e.g., a register.

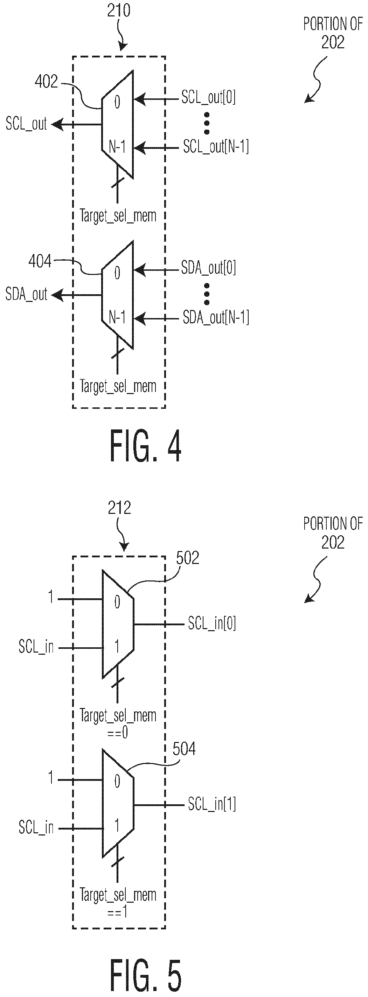

Combinatorial switch logic 202 includes logic circuitry to route signals through switch 102 between pads 112 and 114 and targets[(N-1):0], based on the index value (a value between 0 and N-1) indicated by target_sel_mem, stored in storage circuitry 206. For example, combinatorial switch logic 202 includes a circuit 210 which routes one of SCL_out[(N-1):0] to SCL_out at pad 112 and routes one of SDA_out[(N-1):0] to SDA_out at pad 114 based on target_sel_mem. FIG. 4 illustrates, in block diagram form, a portion of combinatorial switch logic 202 in which circuit 210 is implemented with an N-input multiplexer (MUX) 402 and an N-input MUX 404. The N data inputs of MUX 402 receives each of SCL_out[0] through SCL_out[N-1] from the N targets, and, based on the index value, i, indicated by target_sel_mem (corresponding to the currently selected target) received at the control input of MUX 402, provides SCL_out[i] from selected target[i] as SCL_out at pad 112. Similarly, the N data inputs of MUX **404** receives each of SDA_out[0] through SDA_out[N-1] from the N targets, and based on the index value, i, indicated by target_sel_mem received at the control input of MUX **404,** provides SDA_out[i] from selected target[i] as SDA_out at pad 114.

Referring back to FIG. 2, combinatorial switch logic 202 includes a circuit 212 which, for each target, either routes SCL_in from pad 112 or a logic level one to the corresponding SCL_in signal, based on the index value, i, indicated by target_sel_mem. FIG. 5 illustrates, in block diagram form, a portion of combinatorial switch logic 202 in which circuit 212 is implemented with N 2-input MUXes, one for each target. Each MUX receives a logic level one at a first data input and SCL_in from pad 112 at a second data input, and receives a control signal based on the index value indicated by target_sel_mem. Using the example in which N=2 described above, circuit 212 includes a MUX 502 for target[0] which outputs a logic level one or SCL_in from pad 112 as SCL_in[0], and a MUX 504 for target[1] which outputs a logic level one or SCL_in from pad 112 as SCL_in[1]. The control input of each MUX receives a logic level one if the index value indicated by target_sel_mem matches the index value of the corresponding target so as to route SCL_in to the corresponding target and receives a logic level zero otherwise, in which a fixed logic level one is provided to SCL_in instead. For example, the control input of MUX 502 receives the result of the comparison expressed by "target_sel_mem == 0" such that if the index of the currently selected target is 0 (as indicated by target_sel_mem), then SCL_in is routed to SCL_in[0], otherwise SCL_in[0] = 1. Similarly, the control input of MUX 504 receives the result of the comparison expressed by "target_sel_mem == 1" such that if the index of the current selected target is 1, then SCL_in is routed to SCL_in[1], otherwise SCL_in[1] = 1. In this manner, only the currently selected target receives SCL_in while the rest receive the fixed value (e.g. a fixed logic level one in the illustrated embodiment).

Referring back to FIG. 2, combinatorial switch logic 202 includes a pass-through element 214 which simply provides SDA_in from pad 114 to the SDA_in of each target (i.e. to SDA_in[(N-1):0]). Therefore, element 214 may simply represent a circuit node in which the value of SDA_in is provided directly to each target. Using the example in which N=2 described above, element 214 is simply a circuit node which provides SCL_in directly to each of SDA_in[0] and SDA_in[1]). In this manner, no matter which target is the selected target or whether the selected target is switched to a new selected target, each target continues to receive the data signal via SDA_in. In this manner, no data on SDA_in is ever lost even when target switching is occurring (in which the occurrence of any target switching between targets having the shared target address is unknown to the external host).

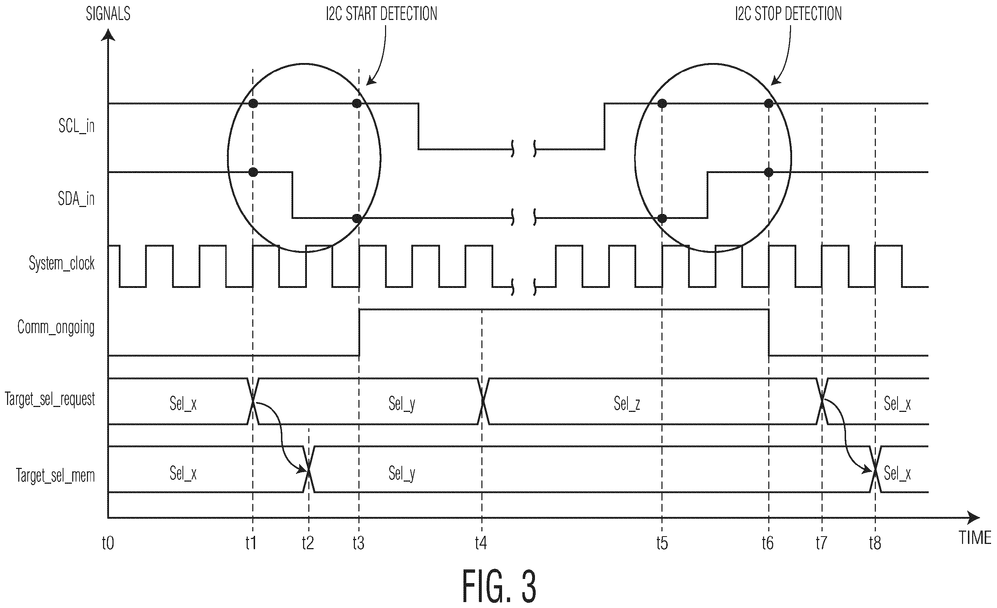

FIG. 3 illustrates waveforms of various signals within SoC 100, in accordance with an embodiment of the present invention. The illustrated signals includes SCL_in (received from an external host at pad 112), SDA_in (received from an external host at pad 114), a system clock within SoC 100, comm_ongoing generated by start/stop detection circuit 208, target_sel_request generated by switch controller 104, and target_sel_mem generated by switch 102 and returned back to switch controller 104. The system clock can be any clock used or generated by SoC 100. Operation of FIGs. 1 and 2 will be described in more detail in reference to the waveforms of FIG. 3.

With the I2C interface, a start in communication between a host (e.g. host 132 or 134) and a target (any of the N targets) is indicated by a falling edge of SDA_in while SCL_in remains at a constant predetermined SCL state (e.g. a logic level high). A stop in communication is indicated by a rising edge of SDA_in while SCL_in remains at the constant predetermined SCL state (e.g. a logic level high). Start/stop detector 208 is configured to assert comm_ongoing to a logic level high after any start is detected, and resets this signal to a logic level low after a stop is detected. The detection of a start or stop indication can be done in different ways. In one embodiment, SDA_in and SCL_in can be sampled multiple times, such as in accordance with the system_clock (e.g. illustrated in FIG. 3 with dots at times t1, t3, t5, and t6, which occur at rising edges of the system_clock) to detect a start or stop indicator. In another embodiment, SDA_in and a delayed version of SDA_in can be sampled and compared to make the detection of the falling or rising edge in combination with SCL_in being at a predetermined fixed logic state. Between the start and stop indicators (e.g., between times t3 and t6 of FIG. 3), comm_ongoing remains asserted at a logic level high while information is communicated between the host and the currently selected target. As will be seen in reference to FIG. 3, the asserted state of comm_ongoing forbids switch 102 from accepting a change in selected target.

Referring to FIG. 3, at time t0, an external host (e.g. host 132) is communicating with the target whose index value indicated by target_sel_mem is sel_x. In this example, sel_x may correspond to target[0]. At time t1, switch controller 104 indicates a desired change in selected target via target_sel_request (in response, for example, to a change in power mode of SoC 100). Therefore, at time t1, switch controller 104 sets the value of target_sel_request to sel_y (which indicates the index value of the new target desired by switch controller 104). In this example, sel_y may correspond to target[1]. Since, at time t1, comm_ongoing is not asserted (is at a logic level low), decision logic 204 accepts the new index value indicated by target_sel_request by saving this new index value in storage circuitry 206. Therefore, the new index value (sel_y, which corresponds to target[1]) is returned at time t2 as target_sel_mem. Therefore, starting at time t2, target_sel_mem indicates sel_y (e.g. target[1]) as the currently selected target.

As described above, a start indicator is identified at time t3, resulting in the assertion of comm_ongoing. Therefore, when switch controller 104 desires a change in targets again at time t4 to the target whose index value is indicated by target_sel_request (sel_z, which may be any other target in SoC 100 which shares the same address as target[0] and target[1]), decision logic 204 evaluates whether or not to accept the requested change in target selection. In this case, at time t4, since comm_ongoing is asserted at a logic level high, decision logic 204 does not accept the new index value indicated by target_sel_request and thus does not update storage circuit 206. Therefore, at time t4, target_sel_mem continues to indicate sel_y (e.g. target[1]), representing that no change to the target indicated by sel_z has occurred. All similar requests via target_sel_request will be refused or postponed until after time t6, when comm_ongoing is again negated back to a logic level zero. Therefore, at time t7 when target_sel_request again requests a selected target switch to sel_x (e.g. back to target[0]), decision logic 204, at time t8, accepts this change request and stores sel_x (the index for target[0]) to storage circuitry 206 such that target_sel_mem now indicates sel_x. Since target_sel_mem has changed from sel_y to sel_x, switch controller 104 knows that its requested target change has been accepted.

Note that typically in an I2C communication system, a host can communicate with one or more targets, in which each target has a unique corresponding target address. A host can therefore identify a target for communication using the unique target address. However, in the illustrated embodiments, multiple targets share a same target address in which the host itself cannot differentiate or indicate a particular target of those multiple targets. Further, the host may not even be aware that there are multiple targets which share the same target address. Instead, switch 102 and switch controller 104 control which target of the these multiple targets with the same shared address is accessed as the selected target via the SCL and SDA signals by controlling the value of target_sel_mem. (Therefore, note that the host does not explicitly select which target at the shared address is the selected target.) As described above, in one embodiment, switch controller 104 can determine which target at a shared access address should be accessed as the selected target depending on the power state or mode of SoC 100. Controlling the value of target_sel_mem, in turn, controls how the SCL_out, SDA_out, and SCL_in signals are communicated between pads 112 and 114 and the currently selected target.

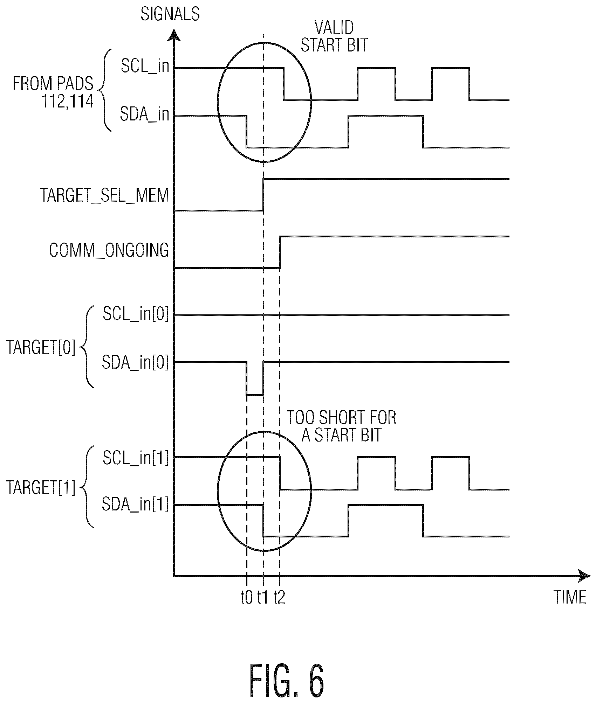

However, regardless of which target is currently selected, SDA_in from pad 114 is always provided to all targets (whether selected or not) and thus the routing of SDA_in from pad 114 does not depend on (i.e. is not controlled by) target_sel_mem. For those targets which are not the currently selected targets, note that SCL_in is received by those targets as the predetermined logic state of a logic level one. In this manner, note that all targets are allowed to observe potential start and stop bits by receiving SDA_in (which is only part of the whole I2C communication), but only the currently selected target is capable of seeing the whole I2C communication by receiving both SCL_in and SDA_in. The lack of MUXing of the SDA_in signals to only the selected target ensures that no start/stop indicator is missed. For example, FIG. 6 illustrates waveforms in accordance with an example in which MUXing of the SDA_in signals to only the selected target is implemented, resulting in a missed start indicator.

In FIG. 6, again it is assumed that only target[0] and target[1] are present and share a same target address, such that target_sel_mem can be a single bit which transitions between a logic level zero (to identify the index value 0 of target[0]) and a logic level one (to identify the index value of 1 of target[1]). In the example of FIG. 6, it is assumed target[0] is the currently selected target prior to time t0. A valid start is received by switch 102 from pads 112 and 114 at time t0, while, at time t1, switch controller 104 requests a target change to target[1] by changing target_sel_mem to a logic level one. If both SCL_in and SDA_in were MUXed and provided only to the selected target, then, prior to t1, SCL_in would be routed to target[0] and not target[1] such that only target[0] would see the falling edge of SDA_in[0] at time t0. Upon the switch in targets to target[1] at time t1, a falling edge would be seen on SDA_in[1] (rather than having been seen at time t0). This delay in seeing a falling edge on SDA_in[1] could result in too short of a timing between the start indicator and reception of valid communication via SCL_in[1] and SDA_in[1] starting at time t2. This could result in a wrong or missed start indicator resulting in possible loss of data during the communication. However, if, instead, all targets (both target[0] and target[1]) were to always receive SDA_in from pad 114 as SDA_in[0] and as SDA_in[1], then even with the switch in targets at time t1, the falling edge of SDA_in at time t0 indicating a valid start indicator would have correctly been "seen" (i.e. received) by the new current target (target[1]) at time t0 rather than at the delayed time t1.

Therefore, in the embodiments described above in which SCL_in is MUXed to the selected target but SDA_in is not MUXed and instead provided to all targets, all targets are ensured to properly receive the start and stop indicators, resulting in more reliable communication. Further, by MUXing SCL_in rather than providing SCL_in to all targets, the unselected targets are also not burdened with receiving garbage data on SCL_in since SCL_in should be meaningless to unselected targets. Therefore, unselected targets are able to observe changes in SDA_in but by having their corresponding SCL_in stuck at a predetermined logic state (e.g. a logic level high), they are prevented from receiving unnecessary information.

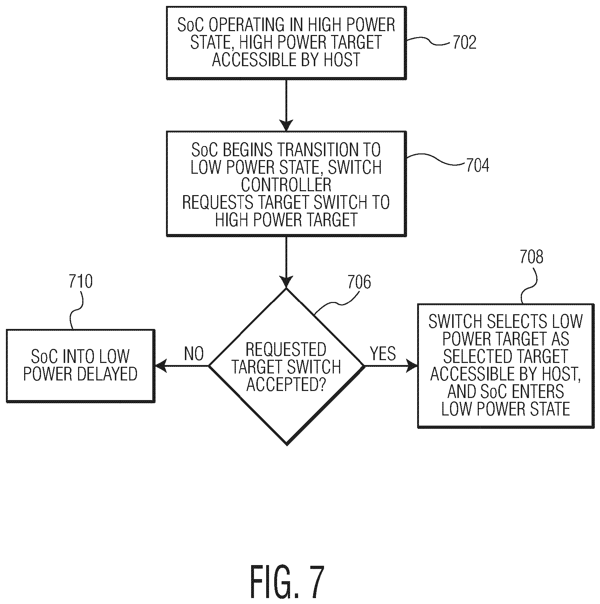

FIG. 7 illustrates, in flow diagram form, an example of the use of SoC 100 in response to power states of SoC 100, in accordance with an embodiment of the present invention. In this example, it is assumed target[0] is a low power target while target[1] is a high power target, both sharing the same target address. In block 702, SoC 100 is operating in a normal or high power state (in which target[1] is the accessible target by an external host). Note that the host simply accesses the shared target address, but has no knowledge of which actual target is selected to respond (and may not even be aware that there are multiple targets sharing the target address). In this case, target_sel_mem is set by switch 102 to select target[1]. Next, at block 704, SoC 100 begins a transition to a low power state in which, before entering the low power state, SoC 100 configures its low power target (target[0]) while still allowing the high power target (target[1]) to continue operation. Once configuration is complete, switch controller 104 requests a target switch by setting target_sel_request to indicate target[0].

At decision diamond 706, based on comm_ongoing, decision control circuit 200 of switch 102 determines whether or not the requested target switch is accepted. If so (e.g. if comm_ongoing is negated), then, at block 708, target_sel_mem is set by switch 102 to select target[0], and SoC 100 can switch off target[1] and its interface to switch 102 and safely enter the low power state. (Note that additional steps, as known in the art, may be taken to prepare SoC 100 to enter the low power state.) If, at decision diamond 706, the requested target switch is not accepted (e.g. comm_ongoing was asserted, indicating a communication was in progress), then, at block 710, low power entry by SoC 100 is delayed and can be retried later.

Therefore, by now it can be appreciated how a communications switch of a communications interface can be implemented with multiple internal targets sharing a same target access address in which a switch of the selected internal target can be requested by a switch controller in response to conditions of the system (e.g. the power state of the system), asynchronous to any communication which may be occurring with the internal targets. Further, the selection and switching between internal targets at the same shared target access address can be performed without knowledge by the host accessing the shard target access address and without any perturbations to that host. In one embodiment, the communications switch only accepts a requested change in the selected target from the switch controller when no communication is currently on-going. That is, no modification of the selected target is permitted while a communication is in progress. Further, to ensure reliable transitions between selected targets, without loss of data, the serial clock portion received from a host (e.g. SCL_in) is only routed to the currently selected target (e.g. via MUXing) but the serial data portion received from the host (e.g. SDA_in), which provides the start and stop indicators for communications, is routed to all targets (both selected and unselected targets) which share the same target access address. In this manner, no target will miss any start or stop indicators, communicated via SDA_in, regardless of when a target switch is accepted.

As used herein, the term "bus" is used to refer to a plurality of signals or conductors which may be used to transfer one or more various types of information, such as data, addresses, control, or status. The conductors as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

The terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Each signal described herein may be designed as positive or negative logic, where negative logic can be indicated by a bar over the signal name or an asterisk (*) following the name. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Brackets are used herein to indicate the conductors of a bus, the bit locations of a value, or the index value of similar elements. For example, "bus 60 [7:0]" or "conductors [7:0] of bus 60" indicates the eight lower order conductors of bus 60, and "address bits [7:0]" or "ADDRESS [7:0]" indicates the eight lower order bits of an address value. As another example, targets [7:0] indicate 8 targets, each having a corresponding index value of 0 to 7 (in which the 8 targets can be identified as target[0], target[1], ... target[7]). The symbol "$" preceding a number indicates that the number is represented in its hexadecimal or base sixteen form. The symbol "%" preceding a number indicates that the number is represented in its binary or base two form.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention has been described with respect to specific conductivity types or polarity of potentials, skilled artisans appreciated that conductivity types and polarities of potentials may be reversed.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Some of the above embodiments, as applicable, may be implemented using a variety of different information processing systems. For example, although FIG. 1 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Also for example, in one embodiment, the illustrated elements of system 100 are circuitry located on a single integrated circuit or within a same device. Alternatively, system 100 may include any number of separate integrated circuits or separate devices interconnected with each other. For example, memory 110 may be located on a same integrated circuit as targets 106 and 108 or on a separate integrated circuit.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, different logic circuitry, in addition to or other than the MUXes can be used within combinatorial switch 202 to appropriately route the signals through switch 102 between the hosts and targets. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

The following are various embodiments of the present invention. Note that any of the aspects below can be used in any combination with each other and with any of the disclosed embodiments.

In an embodiment, a system includes a plurality of targets, each having a corresponding target address, wherein a first target and a second target of the plurality of targets share a same target address, wherein one target of the first and second targets is a selected target; a communications switch configured to communicate a clock signal and data signal between input/output (I/O) pads of the system and the plurality of targets, wherein the I/O pads are configured to communicate with a host via a communications interface; and a switch controller configured to provide a target select request signal to the communications switch to indicate a desired target between the first and second targets, wherein the communications switch is configured to selectively accept the desired target as the selected target based on whether or not communication through the communications interface is occurring. In a first aspect, the communications switch includes a decision control circuit configured to accept the desired target as the selected target when no communication through the communications interface is occurring and not change the selected target to the desired target when communication through the communications interface is occurring. In a further aspect, the decision control circuit is configured to determine whether communication through the communications interface is occurring based on a received clock signal and a received data signal from the communications interface. In yet a further aspect, the communications switch is configured to provide the received clock signal to only the selected target of the first and second targets, and provide the received data signal to each of the first and second targets, regardless of which is the selected target. In yet an even further aspect, the communication switch is configured to provide the received data signal to each target of the plurality of targets, such that start indicators received via the receive data signal, each indicating a start of a communication through the communications interface, are always received by all targets of the plurality of targets. In another further aspect, the decision control circuit determines that communication through the communications interface is occurring when a start indicator has been received via the received data signal but a stop indicator has not yet been received via the received data signal. In a further aspect, the start indicator is received when the received clock signal is at a predetermined state and a predetermined edge type is received at the received data signal. In yet a further aspect, the stop indicator is received when the received clock is at the predetermined state and an edge type opposite to the predetermined edge type is received at the received data signal. In another aspect of the above embodiment, the communications interface is characterized as an Inter-Integrated Circuit (I2C) interface. In another aspect, a third target of the plurality of targets shares the same target address, wherein the target select request signal indicates one of the first, second, and third targets as the selected target. In yet another aspect of the above embodiment, the switch controller is configured to indicate one of the first or the second target as the desired target based on a power mode of the system. In a further aspect, the first target is a high power target and the second target is a low power target, wherein the low power target operates at a lower power as compared to the high power target, wherein when the system enters the low power mode, the switch controller is configured to provide the target select request signal to indicate the low power target. In another aspect of the above embodiment, the switch controller provides the target select request signal to the communications switch to change the selected target asynchronous to any communication on the communications interface. In yet another aspect, the host is configured to access the same shared target address without knowledge of which of the first target or the second target is the selected target which responds to the access.

In another embodiment, a system is configured to interface with a host via an Inter-Integrated Circuit (I2C) interface, and the system includes a plurality of I2C targets, each configured to receive a corresponding data signal input and a corresponding clock signal input, each I2C target having a corresponding target address, wherein a first target and a second target of the plurality of I2C targets share a same target address, wherein one I2C target of the first and second I2C targets is a selected target; and a communications switch configured to communicate clock and data signals of the I2C interface between the I2C interface and the plurality of I2C targets. The communications switch is configured to route a received clock signal from the I2C interface to the corresponding clock signal input of the selected target and not to the corresponding clock signal inputs of any unselected I2C targets, and route a received data signal from the I2C interface to the corresponding data signal input of each I2C target of the plurality of I2C targets, including both the selected target and any unselected targets. The system also includes a switch controller configured to provide a target select request signal to the communications switch to indicate a desired target between the first and second I2C targets, wherein the communications switch is configured to selectively accept the desired target as the selected target based on whether or not communication through the I2C interface is occurring. In one aspect of the another embodiment, the communications switch is configured to provide a predetermined logic state to the corresponding clock signal inputs of all unselected targets while routing the received clock signal to the corresponding clock signal input of the selected target. In another aspect, the communications switch is configured to route an output clock signal and an output data signal from the selected target to the I2C interface. In yet another aspect, the switch controller is configured to indicate one of the first or the second I2C target as the desired target based on a power mode of the system. In a further aspect, the first I2C target is a high power target and the second I2C target is a low power target, wherein the low power target operates at a lower power as compared to the high power target, wherein when the system enters the low power mode, the switch controller is configured to provide the target select request signal to indicate the low power target. In another aspect of the another embodiment, the host is configured to access the same shared target address without knowledge of which of the first I2C target or the second I2C target is the selected target.

## Claims

1. A system comprising:
a plurality of targets, each having a corresponding target address, wherein a first target and a second target of the plurality of targets share a same target address, wherein one target of the first and second targets is a selected target;
a communications switch configured to communicate a clock signal and data signal between input/output (I/O) pads of the system and the plurality of targets, wherein the I/O pads are configured to communicate with a host via a communications interface; and
a switch controller configured to provide a target select request signal to the communications switch to indicate a desired target between the first and second targets, wherein the communications switch is configured to selectively accept the desired target as the selected target based on whether or not communication through the communications interface is occurring.

2. The system of claim 1, wherein the communications switch comprises a decision control circuit configured to accept the desired target as the selected target when no communication through the communications interface is occurring and not change the selected target to the desired target when communication through the communications interface is occurring.

3. The system of claim 2, wherein the decision control circuit is configured to determine whether communication through the communications interface is occurring based on a received clock signal and a received data signal from the communications interface.

4. The system of claim 3, wherein the communications switch is configured to:
provide the received clock signal to only the selected target of the first and second targets, and
provide the received data signal to each of the first and second targets, regardless of which is the selected target.

5. The system of claim 4, wherein the communication switch is configured to provide the received data signal to each target of the plurality of targets, such that start indicators received via the receive data signal, each indicating a start of a communication through the communications interface, are always received by all targets of the plurality of targets.

6. The system of any one of claims 3 to 5, wherein the decision control circuit determines that communication through the communications interface is occurring when a start indicator has been received via the received data signal but a stop indicator has not yet been received via the received data signal.

7. The system of claim 6, wherein the start indicator is received when the received clock signal is at a predetermined state and a predetermined edge type is received at the received data signal.

8. The system of claim 7, wherein the stop indicator is received when the received clock is at the predetermined state and an edge type opposite to the predetermined edge type is received at the received data signal.

9. The system of any preceding claim, wherein the communications interface is characterized as an Inter-Integrated Circuit (I2C) interface.

10. The system of any preceding claim, wherein a third target of the plurality of targets shares the same target address, wherein the target select request signal indicates one of the first, second, and third targets as the selected target.

11. The system of any preceding claim, wherein the switch controller is configured to indicate one of the first or the second target as the desired target based on a power mode of the system.

12. The system of claim 11, wherein the first target is a high power target and the second target is a low power target, wherein the low power target operates at a lower power as compared to the high power target, wherein when the system enters the low power mode, the switch controller is configured to provide the target select request signal to indicate the low power target.

13. The system of any preceding claim, wherein the switch controller provides the target select request signal to the communications switch to change the selected target asynchronous to any communication on the communications interface.

14. The system of any preceding claim, wherein the host is configured to access the same shared target address without knowledge of which of the first target or the second target is the selected target which responds to the access.

## Amended claims

### Amended claims in accordance with Rule 137(2) EPC.

1. A system (100) comprising:
a plurality of targets (106, 108), each having a corresponding target address, wherein a first target and a second target of the plurality of targets share a same target address, wherein one target of the first and second targets is a selected target;
a communications switch (102) configured to communicate a clock signal and data signal between input/output, I/O, pads of the system and the plurality of targets, wherein the I/O pads are configured to communicate with a host via a communications interface (136); and
a switch controller (104) configured to provide a target select request signal to the communications switch to indicate a desired target between the first and second targets, wherein the communications switch is configured to selectively accept the desired target as the selected target based on whether or not communication through the communications interface is occurring,
wherein the switch controller is configured to indicate one of the first or the second target as the desired target based on a power mode of the system,
wherein the first target is a high power target and the second target is a low power target, wherein the low power target operates at a lower power as compared to the high power target, wherein when the system enters the low power mode, the switch controller is configured to provide the target select request signal to indicate the low power target.

2. The system of claim 1, wherein the communications switch comprises a decision control circuit (200) configured to accept the desired target as the selected target when no communication through the communications interface is occurring and not change the selected target to the desired target when communication through the communications interface is occurring.

3. The system of claim 2, wherein the decision control circuit is configured to determine whether communication through the communications interface is occurring based on a received clock signal and a received data signal from the communications interface.

4. The system of claim 3, wherein the communications switch is configured to:
provide the received clock signal to only the selected target of the first and second targets, and
provide the received data signal to each of the first and second targets, regardless of which is the selected target.

5. The system of claim 4, wherein the communication switch is configured to provide the received data signal to each target of the plurality of targets, such that start indicators received via the receive data signal, each indicating a start of a communication through the communications interface, are always received by all targets of the plurality of targets.

6. The system of any one of claims 3 to 5, wherein the decision control circuit determines that communication through the communications interface is occurring when a start indicator has been received via the received data signal but a stop indicator has not yet been received via the received data signal.

7. The system of claim 6, wherein the start indicator is received when the received clock signal is at a predetermined state and a predetermined edge type is received at the received data signal.

8. The system of claim 7, wherein the stop indicator is received when the received clock is at the predetermined state and an edge type opposite to the predetermined edge type is received at the received data signal.

9. The system of any preceding claim, wherein the communications interface is characterized as an Inter-Integrated Circuit, I2C, interface.

10. The system of any preceding claim, wherein a third target of the plurality of targets shares the same target address, wherein the target select request signal indicates one of the first, second, and third targets as the selected target.

11. The system of any preceding claim, wherein the switch controller provides the target select request signal to the communications switch to change the selected target asynchronous to any communication on the communications interface.

12. The system of any preceding claim, wherein the host is configured to access the same shared target address without knowledge of which of the first target or the second target is the selected target which responds to the access.
